(19) Europäisches Patentamt / European Patent Office / Office européen des brevets

(11) **EP 4 611 306 B1**

(12) **EUROPEAN PATENT SPECIFICATION**

(45) Date of publication and mention
of the grant of the patent:
**18.03.2026 Bulletin 2026/12**

(21) Application number: **24160932.0**

(22) Date of filing: **01.03.2024**

(51) International Patent Classification (IPC):
*H04L 9/06* (2006.01)  *H04L 9/40* (2022.01)
*H04L 9/08* (2006.01)

(52) Cooperative Patent Classification (CPC):
**H04L 63/0428; H04L 9/0643; H04L 9/0822**

(54) **METHODS AND ARRANGEMENTS FOR ENABLING SECURE SIGNALLING**

VERFAHREN UND ANORDNUNGEN ZUR ERMÖGLICHUNG SICHERER SIGNALISIERUNG

PROCÉDÉS ET AGENCEMENTS POUR PERMETTRE UNE SIGNALISATION SÉCURISÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**03.09.2025 Bulletin 2025/36**

(73) Proprietor: **Gurulogic Microsystems Oy
20100 Turku (FI)**

(72) Inventor: **Kärkkäinen, Tuomas
20400 TURKU (FI)**

(74) Representative: **Papula Oy
P.O. Box 981
00101 Helsinki (FI)**

(56) References cited:
**EP-A1- 4 231 583      EP-B1- 3 364 330
WO-A1-2017/095648    US-A1- 2008 162 935**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## FIELD OF THE INVENTION

The invention concerns generally the technical field of security needed in using digital services among two or more communicating parties. In particular, the invention concerns the task of signalling to a party in a way that precludes possible non-authorized observers from finding out the initiator of the signalling.

## BACKGROUND OF THE INVENTION

In telecommunication, signalling means the use of signals to control communications. Typically, signalling involves exchanging relatively simple pieces of information for purposes like establishing and maintaining a connection for communications between two or more communicating parties. The difference between signalling and communications may in many cases be described so that communications are for transferring arbitrary payload information while signalling is for ensuring that the payload information can be transferred as intended. This characterisation is, however, not universally applicable as some signalling protocols also include the possibility of using signalling to convey some limited number of arbitrary bytes that may involve application-related payload data.

An often-used example of signalling involves the procedures used to make a communication device (and the user thereof) aware that another communication device (and its user) intends to set up an active connection for communications. In telephony, such procedures are described in short as "calling" a user. As the "called" device is initially unaware of the arriving call, also the characterisation "waking up" the device is used. Other examples of signalling include, but are not limited to, push-type messaging and triggers aimed at making the target device perform a desired action like providing a status report.

Known procedures of signalling, particularly for the purposes of waking up a communication device or making it aware of the need to set up a connection, involve a drawback related to digital security. For expediting the setting up of a connection and also for giving the intended recipient the possibility to choose whether to respond or not, the signalling used to wake up the communication device contain an identifier of the "caller", i.e. the party who took the initial active steps to initiate communications. In short, the known ways of signalling enable the called user to see who is calling. If an unauthorized observer has means for intercepting the signalling, they can eventually generate a map of who is communicating with whom. Even under normal conditions revealing such information to unauthorized parties has its risks. In a state of war or other ultimate hazard, becoming exposed may be life-threatening to the communicating parties.

As the signalling stage takes place at the very beginning of an active connection for communications between parties, it has been considered difficult to protect the signalling stage with reliable cryptographic solutions: only after the first exchange of signalling the parties can continue to a step of acquiring sufficient public keys or other cryptographic material known to both, to secure confidential mutual communication. A natural solution would be to require all devices to preliminary acquire and maintain cryptographic keys of all possible partners they might later communicate with, but that would easily lead to impossibly complicated logistics of data. Not only would the amount of stored data be large, but it should also be constantly updated as new partnerships appear, old partnerships go obsolete, and keys expire after a certain period of time. US 2008162935 describes a store and forward node where a first cryptographic key, encrypt a message with the first cryptographic key to produce a first encrypted message, and further encrypt the first cryptographic key and an identifier of a second apparatus with a first encryption key to form a second encrypted message.

## SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide methods and arrangements for enabling secure signalling between devices so that the signalling would not reveal confidential information to any eavesdropping third party.

According to a first aspect, there is provided a device for initiating signalling to an intended recipient device. The device comprises a cryptographic engine configured to produce cryptoproducts from given input data and a transceiver configured to set up and maintain communications with remote parties. Said cryptographic engine is configured to use a public key of said intended recipient device and a seed as inputs to a first encrypting operation to produce a shared secret and an encapsulated element that is an encapsulated form of said shared secret, and use at least said shared secret and a message as inputs to one or more further cryptographic operations to produce an encrypted message. Said transceiver is configured to use at least said encapsulated element and said encrypted message as information elements of a signalling message and transmit said signalling message to one of said remote parties for further forwarding towards said intended recipient device.

**EP 4 611 306 B1**

According to an embodiment, said cryptographic engine is configured to, as a part of said one or more further cryptographic operations use a nonce said shared secret, and a salt as inputs to a second encrypting operation to produce a secret key, and use said message, said secret key, and said nonce as inputs to a third encrypting operation to produce said encrypted message. Said transceiver may then be configured to use also said nonce as an information element of said signalling message. This involves at least the advantage that additional security is provided against possible attacks by unauthorized parties that could aim at hacking said shared secret.

According to an embodiment, said cryptographic engine is configured to, as a part of said one or more further cryptographic operations, use at least said message as an input to a MAC calculation to produce a MAC value. Said transceiver may then be configured to use said MAC value as an information element of said signalling message. This involves at least the advantage that the receiving device can easily verify immutability of the received message.

According to an embodiment, said cryptographic engine is configured to check, prior to producing said shared secret and said encapsulated element, whether it has a valid form of said public key of said intended recipient device at its disposal. Said cryptographic engine may then be configured to, as a response to finding that it has no valid form of said public key of said intended recipient device at its disposal, use said transceiver to request said valid form of said public key of said intended recipient device from one of said remote parties. This involves at least the advantage that the device can adapt to systems where keys are only valid for a certain validity period. Also, the device is capable of using this kind of communications also for signalling to devices of which they do not yet know all essential information elements.

According to an embodiment, said transceiver is configured to check, in response to a detected need of initiating said signalling, whether it has an active connection to a dedicated node among said remote parties. Said transceiver may then be configured to, as a response to finding that it has no active connection to a dedicated node among said remote parties, transmit a request to one of said remote parties to set up a dedicated node. This involves at least the advantage that the device is capable of utilising such modes of communication that go through dedicated nodes.

According to a second aspect, there is provided a device for responding to signalling initiated by an initiator device. The device comprises a cryptographic engine configured to produce cryptoproducts from given input data, and a transceiver configured to set up and maintain communications with remote parties. Said transceiver is configured to forward information elements from a received signalling message to said cryptographic engine. Said cryptographic engine is configured to use a locally stored private key and an encapsulated element, said encapsulated element being forwarded as one of said information elements by said transceiver, as inputs to a first decrypting operation to decrypt said encapsulated element into a shared secret, and use at least said shared secret and an encrypted message forwarded as one of said information elements by said transceiver as inputs to one or more further cryptographic operations to decrypt said encrypted message into a message.

According to an embodiment, said cryptographic engine is configured to, as a part of said one or more further cryptographic operations, use said shared secret, a locally stored salt, and a nonce forwarded as one of said information elements by said transceiver as inputs to a second decrypting operation to produce a secret key, and use said secret key, said encrypted message, and said nonce as inputs to a third decrypting operation to decrypt said encrypted message into said message. This involves at least the advantage that additional security is provided against possible attacks by unauthorized parties that could aim at hacking said shared secret.

According to an embodiment, said cryptographic engine is configured to, as a part of said one or more further cryptographic operations, use a MAC value forwarded as one of said information elements by said transceiver as an input to said third decrypting operation to decrypt said encrypted message into said message. This involves at least the advantage that the device can easily verify immutability of the received message.

According to a third aspect, there is provided a method for initiating signalling to an intended recipient device. The method comprises using a public key of said intended recipient device and a seed as inputs to a first encrypting operation to produce a shared secret and an encapsulated element that is an encapsulated form of said shared secret, and using at least said shared secret and a message as inputs to one or more further cryptographic operations to produce an encrypted message. The method comprises using at least said encapsulated element and said encrypted message as information elements of a signalling message, and transmitting said signalling message to a remote party for further forwarding towards said intended recipient device.

According to an embodiment, the method comprises, as a part of said one or more further cryptographic operations, using a nonce, said shared secret, and a salt as inputs to a second encrypting operation to produce a secret key, and using said message, said secret key, and said nonce as inputs to a third encrypting operation to produce said encrypted message. The method may then comprise using also said nonce as an information element of said signalling message. This involves at least the advantage that additional security is provided against possible attacks by unauthorized parties that could aim at hacking said shared secret.

According to an embodiment the method comprises, as a part of said one or more further cryptographic operations, using said message as an input to a MAC calculation to produce a MAC value, and using said MAC value as an information element of said signalling message. This involves at least the advantage that the receiving device can easily verify immutability of the received message.

3

According to an embodiment, the method comprises checking, prior to producing said shared secret and said encapsulated element, whether a valid form of said public key of said intended recipient device is available. The method may then comprise, as a response to finding that no valid form of said public key of said intended recipient device is available, requesting said valid form of said public key of said intended recipient device from a remote party. This involves at least the advantage that the device can adapt to systems where keys are only valid for a certain validity period. Also, the device is capable of using this kind of communications also for signalling to devices of which they do not yet know all essential information elements.

According to an embodiment, the method comprises checking, in response to a detected need of initiating said signalling, whether an active connection to a dedicated node at a remote party is available. The method may then comprise, as a response to finding that no active connection to a dedicated node at a remote party is available, transmitting a request to a remote party to set up a dedicated node. This involves at least the advantage that the device is capable of utilising such modes of communication that go through dedicated nodes.

According to a fourth aspect, there is provided a method for responding to signalling initiated by an initiator device. The method comprises forwarding information elements from a received signalling message to a cryptographic engine and using a locally stored private key and an encapsulated element, said encapsulated element being forwarded as one of said information elements, as inputs to a first decrypting operation to decrypt said encapsulated element into a shared secret. The method comprises using at least said shared secret and an encrypted message forwarded as one of said information elements as inputs to one or more further cryptographic operations to decrypt said encrypted message (213) into a message.

According to a fifth aspect, there is provided a computer program product comprising one or more sets of one or more machine-executable instructions that are configured to, when executed by one or more processors, make said one or more processors execute a method of a kind described above.

## BRIEF DESCRIPTION OF THE DRAWINGS

In the drawings:

**Figure 1** illustrates a sequence of events between two users and one or more mediators,
**Figure 2** illustrates a method executed by an initiator device,
**Figure 3** illustrates a signalling message,
**Figure 4** illustrates a method executed by a recipient device,
**Figure 5** illustrates a sequence of events between two users and one or more mediators,
**Figure 6** illustrates a method executed by an initiator device, and
**Figure 7** illustrates a device for initiating and receiving signalling.

## DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

Concerning terminology, in this description the term cryptoproduct means the output of a cryptographic operation. Examples of cryptoproducts include but are not limited to encryption keys, sets of keys, certificates, and digital signatures. Cryptographic operations (or crypto-operations for short) can in many cases be further characterised as either encrypting operations or decrypting operations. Also concerning terminology, it may be noted that signalling with two "l"s and signaling with one "l" are here considered to be the same thing.

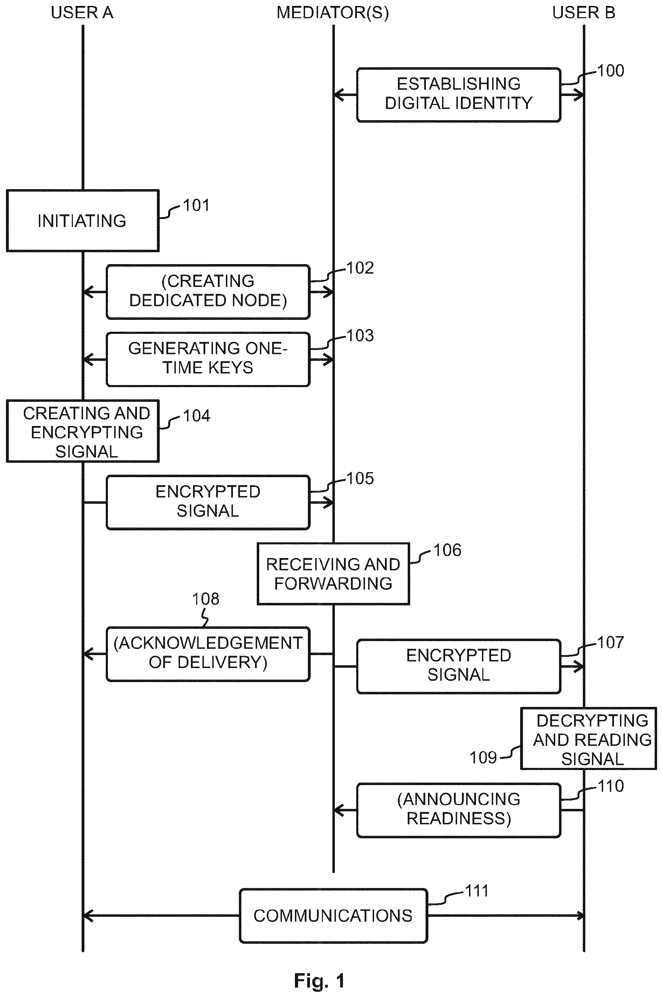

Fig. 1 shows an example sequence of events involving user A, user B, and one or more remote parties called mediators. The intention of user A is to signal to user B, using a method that would not reveal confidential information to any possible eavesdropping third party. As a non-limiting example, the purpose of such signalling could be to make user B aware of a desire by user A to initiate end-to-end communications such as a call and to instruct user B to perform actions necessary for establishing such end-to-end communications. Other examples include, but are not limited to, passing some simple piece of information to user B; and instructing user B to establish a further communications connection somewhere else.

Step 100 is a preliminary step at which user B communicates with a remote party that could be characterized as a trust provider. The purpose of step 100 is to establish a digital identity for user B or to update a previously established digital identity of user B. Methods and hardware aspects that can be used for step 100 are for example those described in a co-pending patent application EP 22157019.5, although the exact methods and hardware aspects used are of little importance. The only assumption that needs to be made here concerning step 100 is that as a result thereof, a post-quantum encryption certificate of user B exists. The post-quantum encryption certificate may comprise (or from the quantum encryption certificate it may be possible to unambiguously derive) a pair of digital encryption keys. These may be called a public key and a private key of user B, and they are cryptographically linked to each other so that an encryption performed with one of them can only be decrypted with the other. For optimal security, the public key and private key of user B should be long enough to be quantum safe, meaning that a brute force attack to crack the encryption made with them would take an impractically long time even if attempted with a quantum computer.

Using the CRYSTALS-Kyber algorithm as an example, and the Kyber-1024 method in particular, the generation of the public and private keys for user B may be represented with the following Golang example:

```
k := kyber.NewKyber1024()

pk, pv := k.KeyGen(*Seed)
```

Here pk is the public key, pv is the private key, and Seed is a random seed obtained from a source capable of producing random outputs of high cryptographic entropy. A capability of producing this kind of random seeds is a characteristic feature of arrangements that can be employed as a trust provider.

Step 101 represents actions by user A to initiate the signalling. As user A may actually be a person or a digital automaton that additionally needs a communications device to participate in the process of fig. 1, step 101 may be considered as interacting with the respective communications device in the purpose of making it execute the necessary steps to initiate signalling. Returning to the assumption of initiating a call as the example, if user A is a person, at step 101 user A may utilize the user interface of a respective communications device to input or select the name or other identifier of user B as identifying the party to be called.

Step 102 in fig. 1 is optional in the sense that it pertains only to a particular way of establishing and maintaining point-to-point calls between users as the desired result of signalling. Here it is assumed that such point-to-point calls require a so-called dedicated node at a mediator party, to which dedicated node each of the communicating parties establishes an active connection. Unless users A and B were very recently involved in such a point-to-point call, no such dedicated node can be assumed to be currently available. In such a case the necessary actions are performed at step 102 to ensure that a dedicated node is available for the intended communications.

Step 103 represents in general all such possible steps of interaction between user A and one or more mediators that aim at ensuring that user A has the necessary information elements about user B to signal to user B in accordance with the invention. In particular, user A should have the public key of user B. User A may use the public key of user B to generate, possibly in further cooperation with one or more mediators, one or more so-called one-time keys that will only be used for this particular instant of signalling. At step 104 user A utilizes such one-time keys to create a message, to encrypt it, and to construct a signalling message that contains said encrypted message and other information elements. Advantageous methods for generating one-time keys, for encrypting a message, and for constructing the signalling message are described in detail later in this text.

At step 105 the constructed signalling message gets transmitted from user A to a mediator. Notable is that the signalling message transmitted at step 105 does not contain any information element that would identify user A as its originator. In particular, it is assumed here that user A did not, unlike in typical prior art methods, use any such private encryption key in constructing the signalling message that would require decrypting with a corresponding public key of user A. Namely, as any public key of user A can be assumed to be available also to unauthorized third parties, such a third party could try decrypting the signalling message or some part thereof with such a public key of user A. Successful decrypting with a public key of user A would then identify user A as the originator of the signalling message, which is undesirable in the framework of the present invention.

The mediator(s) to which user A transmits the signalling message at step 105 must be able to eventually forward the signalling message to its intended recipient, user B. The way in which this is accomplished is not important as such for the present invention. One may use, for example, any known message forwarding service such as the Firebase Cloud Messaging (FCM) service offered by Google, Inc.; Amazon Simple Notification Service offered by Amazon.com, Inc; Microsoft Azure Notification Hubs offered by Microsoft Corporation; or OneSignal offered by OneSignal, Inc. at the time of writing this text. Specifications of the message forwarding service used then define, in which form an identifier of the intended recipient must be derivable from the transmitted signalling message. All actions performed by the mediator(s) to receive and forward the signalling message are generally represented by step 106 in fig. 1. At step 107 the signalling message is eventually received by user B.

Step 108 is optional and represents an acknowledgement transmitted to user A that the signalling message has been forwarded towards user B. Whether or not such an acknowledgement is transmitted - or whether any forwarding mediator is even capable of transmitting such an acknowledgement - depends on the transmission protocols used.

At step 109 user B decrypts the signalling message to read its contents. As is described in more detail later in this text, step 109 may comprise multiple cryptographic operations as there may be multiple layers of encryption involved. For decrypting, user B needs - among others - their own private key, which was previously provided in step 100.

Step 110 is again optional, and it may comprise user B announcing their readiness for whatever the signalling was meant to be triggered. For example, if the meaning was to establish point-to-point communications through a dedicated node at a mediator, at step 110 user B may establish an active connection to such a dedicated node. As point-to-point communications was the example used here, there is step 111 in fig. 1 representing the communications between users A and B as a result of the successful signalling.

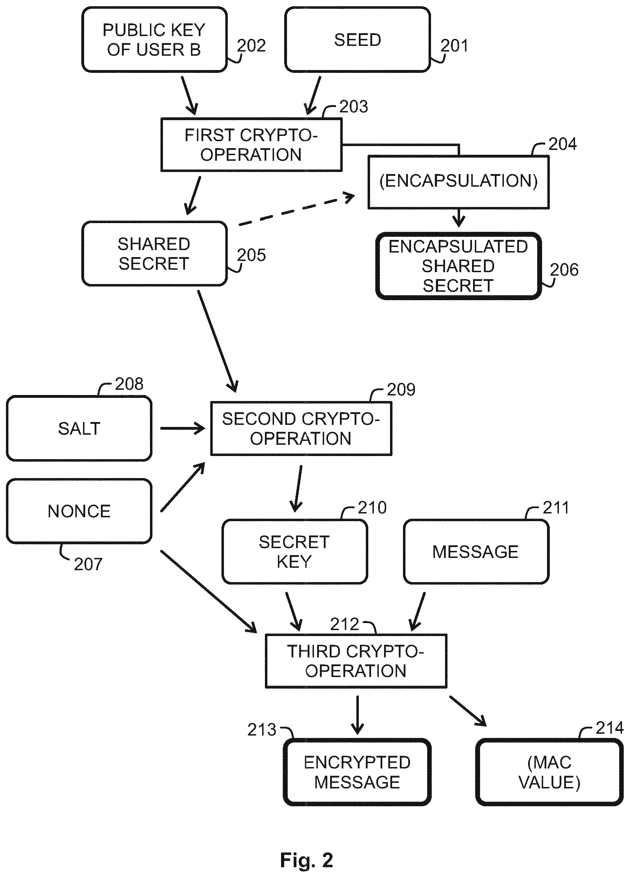

Fig. 2 shows an example of a detailed way in which the device of an initiating user (user A in the example above) may initiate signalling to an intended recipient device. While little needs to be assumed about the structure or functional organization of the device, for the sake of unambiguous reference we may assume that it comprises at least a cryptographic engine configured to produce cryptoproducts from given input data and a transceiver configured to set up and maintain communications with remote parties. Of these, fig. 2 concerns particularly the cryptographic engine.

As shown at the top of fig. 2, the cryptographic engine is configured to use a seed 201 and a public key 202 of the intended recipient as inputs to a first encrypting operation 203. In general, the intended recipient may be understood as an intended receiving device, an intended receiving person, or some other intended receiving entity. The actual nature of the intended recipient is not important for the present description, as long as the intended recipient is an entity known to and acknowledged by the trust provider that issued the post-quantum encryption certificate that served as the origin of the public key 202.

The seed 201 should be a random string representing as high cryptographic entropy as practically possible. The device may comprise a random number generator (RNG) tasked with producing the seed 201. Additionally or alternatively, the device may receive the seed from an external source, such as a trust provider. At the time of writing this text, sufficient randomness of the seed 201 may be achieved with a seed that is 64 bytes long, for example. For clarity, it should be noted that the seed meant here is not the same seed that may have been previously used to generate the public and private keys of user B.

The device may have obtained the public key 202 of the intended recipient device in various ways. As an example, the device may have requested the public key 202 of the intended recipient device from an external trust provider, such as a vault service tasked with storing public keys of users. Vault services of this kind may be configured to return a public key of any user known to them as a response to a request that contains some kind of an identifier, such as a hashed user identifier typically known by the acronym HUId. It is also possible that the device has the public key 202 of the intended recipient device already stored, for example if signalling of the kind described here has been performed already earlier or if the device has a local storage of public keys of known possible recipient devices for some other reason.

As a note of HUId's, it is highly recommendable to always protect a plaintext user ID with a unidirectional hash, so that an user ID is not revealed otherwise than between those parties who know it in plaintext. This is a further way of making it harder for possible eavesdropping parties to identify a party involved in communications, compared to simpler cases where one would simply use a phone number or an email address directly to identify a user.

The first encrypting operation 203 is preferably of a kind that produces, from the inputs given to it, both a shared secret 205 and an encapsulated element 206 that is an encapsulated form of said shared secret 205. In fig. 2 this is illustrated by showing separately an encapsulating part 204 of the first encrypting operation. In cryptography, encrypting operations of this kind are generally called Key Encapsulation Mechanisms or KEMs. They have certain advantages compared to traditional approaches to the exchanging of symmetric keys, where a random symmetric key is first generated and subsequently encrypted using a chosen public key algorithm. As the symmetric keys are generally short, said traditional approaches require padding, with the consequent susceptibilities associated with padding schemes. KEMs simplify the process by generating a random element in the finite group underlying the public key system and deriving the symmetric key by hashing that element, eliminating the need for padding. A well-known example of a KEM is the CRYSTALS-Kyber algorithm.

Known applications of KEMs typically require that the parties have previously shared their public keys, which then means that the process cannot be made completely anonymous regarding the communicating parties. Here, a different approach is proposed in which the transmitting party uses a public key of the intended receiving party to encapsulate a new, randomly generated cryptographic key. The process explained here produces the encapsulated key and a key for use in encrypting, of which the encapsulated key will be transmitted to the receiving party.

The dashed arrow from the shared secret 205 to the separately shown encapsulating operation 204 in fig. 2 is a reminder of the fact that different KEMs may work in different ways: there are methods that produce the encapsulated shared secret 206 directly from the inputs but also methods that first produce a shared secret 205 and only thereafter encapsulate it in a subsequent step. For the purpose of the present description it is immaterial which of such approaches is used, as long as the first encrypting operation has the other characteristics as described.

Written in the form of a Golang example, the first encrypting operation may be represented as

```
k := kyber.NewKyber1024()

encSS, sharedS := k.Encaps(*receiverPk, *Seed)
```

where sharedS is the shared secret 205 to be formed, encSS is the encapsulated element 206 to be formed, receiverPk is the public key 202 of the intended recipient device and Seed is the seed 201.

The cryptographic engine is configured to then use a least the shared secret 205 and a message 211 as inputs to one or more further cryptographic operations to produce an encrypted message 213. In fig. 2, such further cryptographic operations are the second encrypting operation 209 and the third encrypting operation 212. Elements that the transceiver of the device then uses as information elements of the signalling message to be constructed include at least the encapsulated element 206 and the encrypted message 213. Once constructed, such a signalling message is then transmitted to a remote party for further forwarding towards the intended recipient device.

As such, it would be possible to use the shared secret 205 directly as an encryption key in a relatively straightforward cryptographic operation to encrypt the message 211 into an encrypted message. Suitable candidates for such a cryptographic operations could be for example the AES256-GCM or ChaCha20-Poly1305 algorithms. However, this may not be the most advantageous choice, as the shared secret 205 may be susceptible to attacks. For this reason, as a part of said further cryptographic operations, it may be advantageous to take the shared secret further through a key derivation or hashing function, such as HMAC (Hash-based Message Authentication Code), KDF (Key Derivation Function), or SHA (Secure Hash Algorithm), of which there are advantageous forms such as SHA2_256 or SHA3_256.

As shown in the middle of fig. 2, parts of said one or more further cryptographic operations may be what are here called the second encrypting operation 209 and the third cryptographic operation 212. The cryptographic engine may be configured to use a nonce 207, the shared secret 205 described above, and a salt 208 as inputs to the second encrypting operation 209 to produce a secret key 210. Of these, the nonce 207 is - as already its name implies - an arbitrary number that is to be used just once in the subsequent cryptographic communication, to ensure that old communications cannot be reused in replay attacks. The salt 208 is here assumed to be an additional cryptographic input, the use of which has been previously agreed between the possible initiator and responder devices. As an example, the public key 202 of user B may be re-used as the salt 208 in fig. 2, but this is only an example and other ways of using a salt may be presented. One possibility is that no salt is used at all at this stage, while another possibility is that both a separate salt and the public key 202 of user B are used as cryptographic inputs. Whichever approach is agreed upon, both the transmitting party and the receiving party should know it in advance, for purposes that become clear in the continuation.

An exemplary Golang representation of the second cryptographic operation 209 is

```
secretK := Hash256(sharedS, keyNonce, keySalt)
```

in which secretK is the secret key 210 to be produced, sharedS is the shared secret 205, keyNonce is the nonce 207, and keySalt is the salt 208 (if used). The length of the secret key 210 may be for example 32 bytes, i.e. 256 bits.

As shown in the lower part of fig. 2. the cryptographic engine may be configured to use the message 211, the secret key 210, and the nonce 207 as inputs to a third encrypting operation 212 to produce the encrypted message 213. Examples of algorithms that can be used to implement the third encrypting operation 212 include, but are not limited to, AES256-GCM and ChaCha20-Poly1305. A particular advantage of these is that in addition to the encrypted message, they also produce a so-called MAC (Message Authentication Code) value 214 as an output. Irrespective of whether the production of a MAC value is part of some other algorithm or not, it is in any case advantageous if the cryptographic engine is configured to, as a part of what was above called the one or more further cryptographic operations, use at least the message 211 as an input to a MAC calculation to produce a MAC value 214.

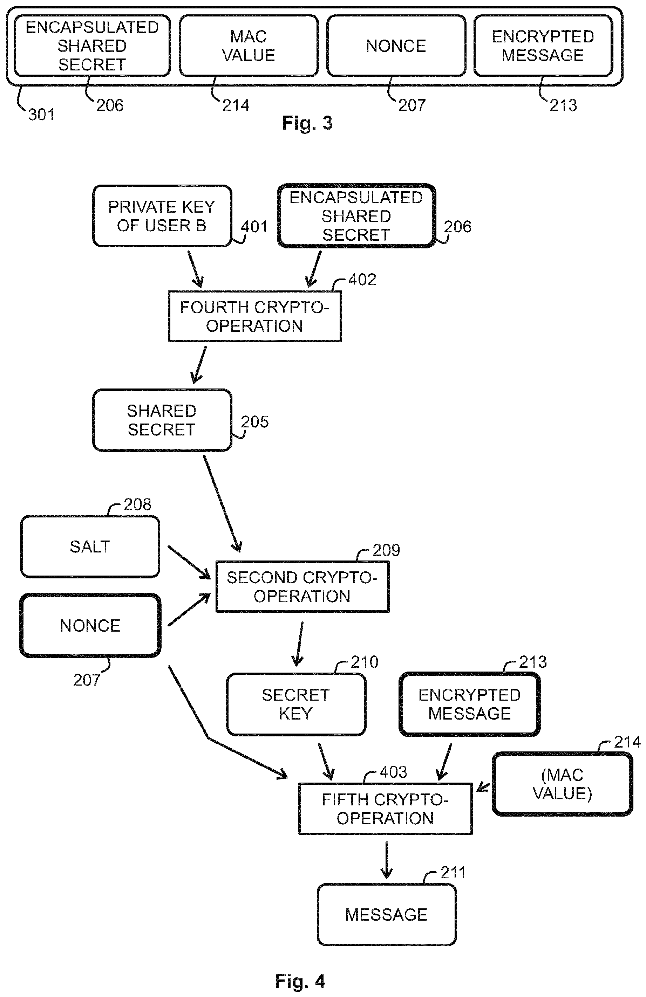

Outputs of the operations shown in fig. 2 that the transceiver of the device may use as information of the signalling message include at least the encapsulated element 206 and the encrypted message 213. As schematically shown in fig. 3, the signalling message 301 may also contain the MAC value 214 as an information element if the cryptographic engine was configured to produce one. If a nonce 207 is used as an input to one or more of the cryptographic operations, the transceiver may be configured to use also the nonce 207 as an information element of the signalling message 301.

Fig. 4 shows an example of a detailed way in which the device of a receiving user (user B in the example above) may decrypt and read a signalling message that an initiating user prepared using a method according to fig. 2. Again, while little needs to be assumed about the structure or functional organization of the device, for the sake of unambiguous reference we may assume that it comprises at least a cryptographic engine configured to produce cryptoproducts from given input data and a transceiver configured to set up and maintain communications with remote parties. Of these, fig. 4 concerns particularly the cryptographic engine. For clarity, it may be noted that a cryptoproduct that a cryptographic engine produces of given input data may be an encrypted version of at least some of the input data if the cryptographic engine is operating in an initiating or message constructing mode, while a cryptoproduct may be a decrypted version of at least some of the input data if the cryptographic engine is operating in a receiving or message reading mode.

As a prerequisite for the actions shown at the top of fig. 4, the transceiver of the device described here is configured to forward information elements from a received signalling message to the cryptographic engine. The cryptographic engine, in turn, is configured to use a locally stored private key 401 and the encapsulated element 206 (which was forwarded by one of the information elements by the transceiver) as input to a first decrypting operation (named a fourth crypto-operation in fig. 4) 402 to decrypt the encapsulated element 206 into a shared secret 205. This means that the first encrypting operation 203 (and 204) in fig. 2 and the first decrypting operation 402 are cryptographically linked to each other: the encapsulation accomplished by the former can be reversed, i.e. decapsulated, by the latter. As the shared secret 205 meant here is thus the same shared secret that appeared as an output of step 203 in fig. 2, decrypting it in step 402 of fig. 4 may also be called regenerating the shared secret. If, according to the example given earlier, the algorithm used in step 203 of fig. 2 was the Kyber1024 algorithm of the CRYSTALS-Kyber suite, the Decapsulate function of the Kyber1024 algorithm can be used at step 402 of fig. 4, as illustrated in the following Golang example:

```
k := kyber.NewKyber1024()

sharedS := k.Decaps(*pv, *encSS)
```

where sharedS is the shared secret to be regenerated by decapsulating, pv is the private key 401, and encSS is the encapsulated element 206.

As shown in the middle and lower parts of fig. 4, the cryptographic engine is configured to use at least the shared secret 205 and the encrypted message 213 (which was forwarded as one of the information elements by the transceiver) as inputs to one or more further cryptographic operations to decrypt said encrypted message 213 into a message 211. In the example embodiment of fig. 4, and in conformity with the example shown earlier in fig. 2, the cryptographic engine may use the (regenerated) shared secret 205, a locally stored salt 208, and a nonce 207 (which was forwarded as one of the information elements by the transceiver) as inputs to a second decrypting operation 209 to produce a secret key. A Golang representation of this operation is the same as that of step 209 in fig. 2, i.e.

```
secretK := Hash256(sharedS, keyNonce, keySalt)
```

Subsequently, the cryptographic engine may use said secret key 210 and the encrypted message 213 as inputs to a third decrypting operation 403 to decrypt said encrypted message 213 into the message 211 in cleartext.

Notable is that in these examples, the second decrypting operation 209 is actually the same as the second encrypting operation 209 in fig. 2, only called here a decrypting operation to emphasize its role as one step towards decrypting the encrypted message 213 into the cleartext form of the message 211 in fig. 4. This similarity of the operations is emphasized in fig. 4 by using the label "second crypto-operation" and the reference designator 209, just like in fig. 2. As was already pointed out earlier, it would not be necessary to use the second encrypting operation 209 in fig. 2 at all if it was deemed sufficient to use the shared secret 205 directly as a key in place of the secret key 210. In such a case, also the second decrypting operation 209 in fig. 4 could be omitted. However, as also pointed out earlier, from the viewpoint of sufficient security against attacks it is preferable to use such an intermediate step at both ends.

The lower part of fig. 4 includes also utilising the MAC value 214 (which was forwarded as one of the information elements by the transceiver) for ensuring authenticity of the message 211. In general it may be said that the cryptographic engine may be configured to, as a part of said one or more further cryptographic operations, use a MAC value 214 forwarded as one of the information elements by the transceiver as an input to a third decrypting operation to decrypt said encrypted message 213 into said message 211, or as an input to some general form of MAC check in which the received MAC value is compared to a respective MAC value recalculated of the same input data after receiving. To ensure unambiguous use of the word "crypto-operation", the third decrypting operation 403 is labelled as the fifth crypto-operation in fig. 4.

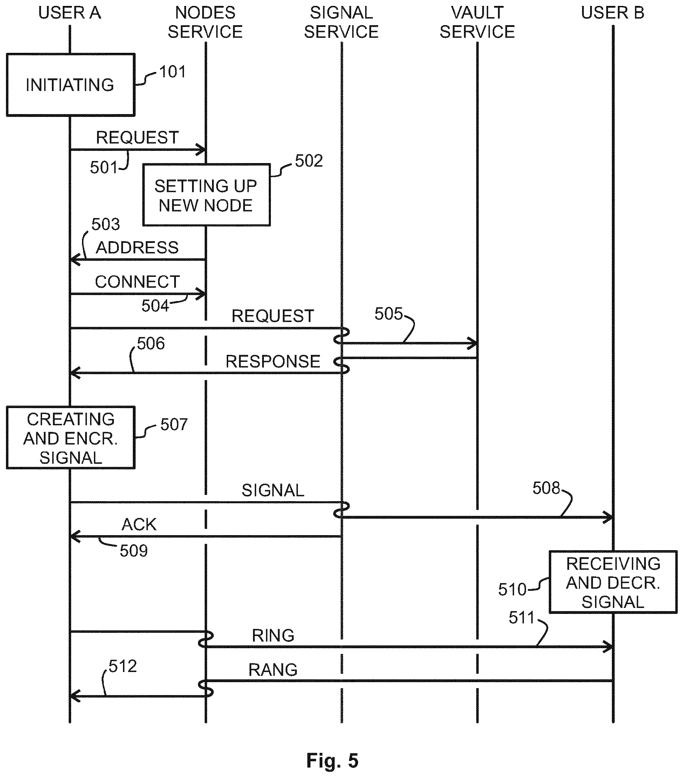

Fig. 5 is essentially a somewhat more detailed illustration of the general process shown earlier in fig. 1, with three of the so-called mediators now separately named as a node (s) service, a signal service, and a vault service. No action corresponding to step 100 of fig. 1 is shown in fig. 5, although it is in any case assumed that public and private keys have been generated for user B.

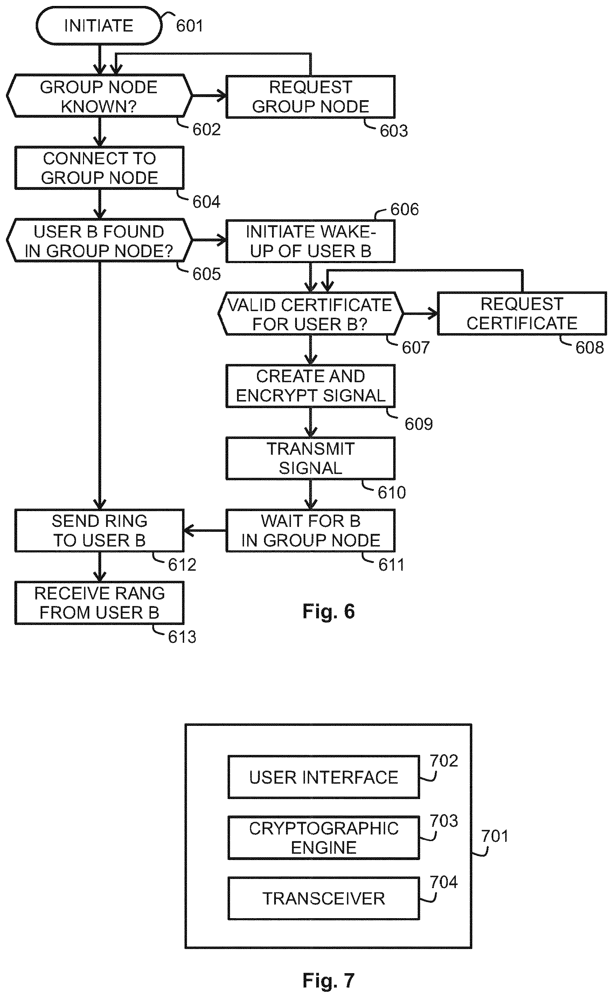

The actions of the device of user A in fig. 5 may be read together with the flow diagram representation in fig. 6. The initiating step 101 may correspond to the initiating step 601 in fig. 6. In step 602 of fig. 6 the device checks, in response to a detected need of signalling, whether an active connection to a dedicated node at a remote party (here: at the nodes service) is available. In fig. 6 the dedicated node is called a group node, emphasizing that the aim of the signalling to be initiated may be to establish a so-called crypto group relationships between users A and B. As a response to finding that no active connection to a dedicated node at a remote party is available, a request 501 may be transmitted to a remote party (here: to the nodes service) to set up a dedicated node. Sending such a request is shown as step 603 in fig. 6, and the actions taken by the nodes service to set up the dedicated node are shown as step 502 in fig. 5. At step 503, the nodes service returns a node address of the dedicated node to the device of user A, and at step 504 in fig. 5 and step 604 of fig. 6 an active connection to the dedicated node is set up. If, in fig. 6, the finding in step 602 was positive, a transition directly to step 604 occurs, so that step 604 now represents just ensuring that the connection remains active.

In fig. 6 an additional check is made at step 605 concerning whether user B is already found at the dedicated node. This could be the case if a previous session of active communications with user B ended only very recently, so that another session could be started without having to send any actual signalling message of the kind described above. Assuming a negative finding at step 605 there occurs a transition to step 606, which means initiating a so-called wake-up signalling to user B.

Step 607 in fig. 6 involves checking, prior to producing any shared secrets or encapsulated elements, whether a valid form of the public key of the intended recipient device is available. As a response to finding that no valid form of said public key of said intended recipient device is available, there occurs a transition to step 608 for requesting a valid form of the public key of the intended recipient device from a remote party. In fig. 5 such a request is shown as step 505, and it is directed to a mediator called the vault service. This vault service may be the same service with which user B has previously communicated to establish a digital identity and to generate the public and private keys described earlier in this text. In fig. 5, step 506 represents the vault service responding with a valid form of the public key of user B.

Step 507 in fig. 5 is essentially the same as step 609 in fig. 6 and involves all those actions an example of which has been shown and described earlier in this text with reference to figs. 2 and 3. To recapitulate, these include at least:

- using a seed and a public key of the intended recipient device as inputs to a first encrypting operation to produce a shared secret and an encapsulated element that is an encapsulated form of said shared secret,
- using at least said shared secret and a message as inputs to one or more further cryptographic operations to produce an encrypted message, and
- using at least said encapsulated element and said encrypted message as information elements of a signalling message.

Optionally, said actions may include:

- as a part of said one or more further cryptographic operations, using a nonce, said shared secret, and a salt as inputs to a second encrypting operation to produce a secret key; using said message, said secret key, and said nonce as inputs to a third encrypting operation to produce said encrypted message; and using also said nonce as an information element of said signalling message.

Optionally, said actions may also include:

- as a part of said one or more further cryptographic operations, using said message as an input to a MAC calculation to produce a MAC value, and
- using said MAC value (214) as an information element of said signalling message (301).

Step 508 in fig. 5 and step 610 in fig. 6 represent transmitting the produced signalling message to a remote party for further forwarding towards the intended recipient device. In fig. 5, this means transmitting the signalling message to a signalling service, which takes care of forwarding it to user B.

Concerning the optional acknowledgement at step 509, one exemplary scenario may be such where a part of the mediator(s) called the signal service in fig. 5 is "internal" in the sense that it knows the identity of user A, while there may be also an "external" service involved like the known Firebase Cloud Messaging service, for example. In such a case, user A and the internal signal service may apply the TLS protocol in their mutual communications, and the original transmission from user A at step 508 may be an HTTP (REST API) REQUEST to the internal signal service. According to the protocol, the internal signal service should respond with an HTTP (REST API) RESPONSE, which would be the acknowledgement shown at step 509. The internal signal service will only transmit the HTTP (REST API) RESPONSE after it has received information from the Firebase Cloud Messaging service that the transmission has been successfully forwarded.

Here it must be noted, however, that due to the nature of push-type messages it is not certain even at that point whether user B actually received the transmission. In the example case considered here, it may happen that the device of user B has not refreshed its FCM token despite a request from the FCM service (or user B has not, as a prerequisite could be, updated said FCM token to the internal signal service), in which case the final delivery of the transmission to user B will not succeed. In practice, user A may have to wait until a timeout at the dedicated node (if one was allocated) to see, whether user B will appear there after having received and decrypted the message and accordingly.

Step 510 in fig. 5 involves all those actions an example of which has been shown and described earlier in this text with reference to figs. 3 and 4. To recapitulate, these include at least:

- forwarding information elements from a received signalling message to a cryptographic engine,
- using a locally stored private key and an encapsulated element, said encapsulated element being forwarded as one of said information elements, as inputs to a first decrypting operation to decrypt said encapsulated element into a shared secret, and
- using at least said shared secret and an encrypted message (forwarded as one of said information elements) as inputs to one or more further cryptographic operations to decrypt said encrypted message into a message.

Fig. 5 conforms with fig. 1 in the sense that here it is again assumed that, as a result of successfully decrypting the message, the device of user B becomes prepared for point-to-point communications with the device of user A using the dedicated node at the nodes service as a mediator. In fig. 5 these communications begin with a so-called ring message 511 from user A and the so-called rang response message 512 from user B to user A. In fig. 6 the corresponding steps are steps 612 and 613. If the communications between users A and B did not involve a dedicated node at which user A could have waited for user B to appear, what was said above about a timeout applies to user A waiting until a timeout whether user B responds to a ring message 511 with a rang response message 512.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments.

**Claims**

1. A device (701) for initiating signalling to an intended recipient device, the device comprising:

   - a cryptographic engine (703) configured to produce cryptoproducts from given input data, and
   - a transceiver (704) configured to set up and maintain communications with remote parties;
   **wherein** said cryptographic engine (703) is configured to

   - use a public key (202) of said intended recipient device and a seed (201) as inputs to a first encrypting operation (203, 204) to produce a shared secret (205),
   - using said public key (202) of said intended recipient device and said seed (201) as inputs to said first encryption operation (203, 204) to also produce an encapsulated element (206) that is an encapsulated form of said shared secret (205), and
   - use at least said shared secret (205) and a message (211) as inputs to one or more further cryptographic operations (209, 212) to produce an encrypted message (213);

**and wherein** said transceiver (704) is configured to

- use at least said encapsulated element (206) and said encrypted message (213) as information elements of a signalling message (301), and
- transmit said signalling message (301) to one of said remote parties for further forwarding towards said intended recipient device.

2. A device (701) according to claim 1, **wherein:**

- said cryptographic engine (703) is configured to, as a part of said one or more further cryptographic operations:

-- use a nonce (207), said shared secret (205), and a salt (208) as inputs to a second encrypting operation (209) to produce a secret key (210), and
-- use said message (211), said secret key (210), and said nonce (207) as inputs to a third encrypting operation (212) to produce said encrypted message (213); and

- said transceiver (704) is configured to use also said nonce (207) as an information element of said signalling message (301).

3. A device (701) according to any of claims 1 or 2, **wherein:**

- said cryptographic engine (703) is configured to, as a part of said one or more further cryptographic operations, use at least said message (211) as an input to a MAC calculation (212) to produce a MAC value (214), and
- said transceiver (704) is configured to use said MAC value (214) as an information element of said signalling message (301).

4. A device (701) according to any of the preceding claims, **wherein:**

- said cryptographic engine (703) is configured to check, prior to producing said shared secret (205) and said encapsulated element (206), whether it has a valid form of said public key (202) of said intended recipient device at its disposal,
- said cryptographic engine (703) is configured to, as a response to finding that it has no valid form of said public key (202) of said intended recipient device at its disposal, use said transceiver (704) to request (505) said valid form of said public key (202) of said intended recipient device from one of said remote parties.

5. A device (701) according to any of the preceding claims, wherein:

- said transceiver (704) is configured to check, in response to a detected need of initiating said signalling, whether it has an active connection to a dedicated node among said remote parties, and
- said transceiver (704) is configured to, as a response to finding that it has no active connection to a dedicated node among said remote parties, transmit a request (501) to one of said remote parties to set up a dedicated node.

6. A device (701) for responding to signalling initiated by an initiator device, the device comprising:

- a cryptographic engine (703) configured to produce cryptoproducts from given input data, and
- a transceiver (704) configured to set up and maintain communications with remote parties;
**wherein** said transceiver (704) is configured to forward information elements from a received signalling message (301) to said cryptographic engine (703,
**and wherein** said cryptographic engine (703) is configured to

- use a locally stored private key (401) and an encapsulated element (206), said encapsulated element (206) being forwarded as one of said information elements by said transceiver (704), as inputs to a first decrypting operation (402) to decrypt said encapsulated element (206) into a shared secret (205), and
- use at least said shared secret (205) and an encrypted message (213) forwarded as one of said information elements by said transceiver (704) as inputs to one or more further cryptographic operations (209, 403) to decrypt said encrypted message (213) into a message (211).

7. A device according to claim 6, wherein said cryptographic engine (703) is configured to, as a part of said one or more further cryptographic operations,

- use said shared secret (205), a locally stored salt (208), and a nonce (207) forwarded as one of said information elements by said transceiver (704) as inputs to a second decrypting operation (209) to produce a secret key (210), and
- use said secret key (210), said encrypted message (213), and said nonce (207) as inputs to a third decrypting operation (403) to decrypt said encrypted message (213) into said message (211).

8. A device according to claim 7, **wherein:**

- said cryptographic engine (703) is configured to, as a part of said one or more further cryptographic operations, use a MAC value (214) forwarded as one of said information elements by said transceiver (704) as an input to said third decrypting operation (403) to decrypt said encrypted message (213) into said message (211).

9. A method for initiating signalling to an intended recipient device, the method comprising:

- using a public key (202) of said intended recipient device and a seed (201) as inputs to a first encrypting operation (203, 204) to produce a shared secret (205),
- using said public key (202) of said intended recipient device and said seed (201) as inputs to said first encryption operation (203, 204) to also produce an encapsulated element (206) that is an encapsulated form of said shared secret (205),
- using at least said shared secret (205) and a message (211) as inputs to one or more further cryptographic operations (209, 212) to produce an encrypted message (213),
- using at least said encapsulated element (206) and said encrypted message (213) as information elements of a signalling message (301), and
- transmitting said signalling message (301) to a remote party for further forwarding towards said intended recipient device.

10. A method according to claim 9, comprising:

- as a part of said one or more further cryptographic operations:

    -- using a nonce (207), said shared secret (205), and a salt (208) as inputs to a second encrypting operation (209) to produce a secret key (210), and
    -- using said message (211), said secret key (210), and said nonce (207) as inputs to a third encrypting operation (212) to produce said encrypted message (213); and

- using also said nonce (207) as an information element of said signalling message (301).

11. A method according to any of claims 9 or 10, comprising:

- as a part of said one or more further cryptographic operations, using said message (211) as an input to a MAC calculation (212) to produce a MAC value (214), and
- using said MAC value (214) as an information element of said signalling message (301).

12. A method according to any of claims 9 to 11, comprising:

- checking, prior to producing said shared secret (205) and said encapsulated element (206), whether a valid form of said public key (202) of said intended recipient device is available,
- as a response to finding that no valid form of said public key (202) of said intended recipient device is available, requesting (505) said valid form of said public key (202) of said intended recipient device from a remote party.

13. A method according to any of claims 9 to 12, comprising:

- checking, in response to a detected need of initiating said signalling, whether an active connection to a dedicated node at a remote party is available, and
- as a response to finding that no active connection to a dedicated node at a remote party is available, transmitting a request (501) to a remote party to set up a dedicated node.

14. A method for responding to signalling initiated by an initiator device, the method comprising:

- forwarding information elements from a received signalling message (301) to a cryptographic engine (703),
- using a locally stored private key (401) and an encapsulated element (206), said encapsulated element (206) being forwarded as one of said information elements, as inputs to a first decrypting operation (402) to decrypt said encapsulated element (206) into a shared secret (205), and
- using at least said shared secret (205) and an encrypted message (213) forwarded as one of said information elements as inputs to one or more further cryptographic operations (209, 403) to decrypt said encrypted message (213) into a message (211).

15. A computer program product comprising one or more sets of one or more machine-executable instructions that are configured to, when executed by one or more processors, make said one or more processors execute a method according to any of claims 9 to 13 or according to claim 14.

**Patentansprüche**

1. Vorrichtung (701) zum Einleiten einer Signalisierung an eine vorgesehene Empfängervorrichtung, wobei die Vorrichtung Folgendes umfasst:

- eine kryptographische Engine (703), die dazu konfiguriert ist, Kryptoprodukte aus gegebenen Eingangsdaten zu erzeugen, und
- einen Sendeempfänger (704), der dazu konfiguriert ist, Kommunikationen mit entfernten Parteien aufzubauen und aufrechtzuerhalten;
wobei die kryptographische Engine (703) dazu konfiguriert ist

- einen öffentlichen Schlüssel (202) der vorgesehenen Empfängervorrichtung und einen Seed (201) als Eingaben für eine erste Verschlüsselungsoperation (203, 204) zu verwenden, um ein geteiltes Geheimnis (205) zu erzeugen,
- unter Verwendung des öffentlichen Schlüssels (202) der vorgesehenen Empfängervorrichtung und des Seeds (201) als Eingaben für die erste Verschlüsselungsoperation (203, 204) auch ein gekapseltes Element (206) zu erzeugen, das eine gekapselte Form des geteilten Geheimnisses (205) ist, und
- mindestens das geteilte Geheimnis (205) und eine Nachricht (211) als Eingaben für eine oder mehrere weitere kryptographische Operationen (209, 212) zu verwenden, um eine verschlüsselte Nachricht (213) zu erzeugen;

und wobei der Sendeempfänger (704) dazu konfiguriert ist,

- mindestens das gekapselte Element (206) und die verschlüsselte Nachricht (213) als Informationselemente einer Signalisierungsnachricht (301) zu verwenden, und
- die Signalisierungsnachricht (301) an eine der entfernten Parteien zur weiteren Weiterleitung in Richtung der vorgesehenen Empfängervorrichtung zu übertragen.

2. Vorrichtung (701) gemäß Anspruch 1, wobei:

- die kryptographische Engine (703) dazu konfiguriert ist, als Teil der einen oder mehreren weiteren kryptographischen Operationen:

-- eine Nonce (207), das geteilte Geheimnis (205), und einen Salt (208) als Eingaben für eine zweite Verschlüsselungsoperation (209) zu verwenden, um einen geheimen Schlüssel (210) zu erzeugen, und
-- die Nachricht (211), den geheimen Schlüssel (210), und die Nonce (207) als Eingaben für eine dritte Verschlüsselungsoperation (212) zu verwenden, um die verschlüsselte Nachricht (213) zu erzeugen; und

- der Sendeempfänger (704) dazu konfiguriert ist, auch die Nonce (207) als ein Informationselement der Signalisierungsnachricht (301) zu verwenden.

**3.** Vorrichtung (701) gemäß einem der Ansprüche 1 oder 2, **wobei:**

- die kryptographische Engine (703) dazu konfiguriert ist, als Teil der einen oder mehreren weiteren kryptographischen Operationen, mindestens die Nachricht (211) als eine Eingabe für eine MAC-Berechnung (212) zu verwenden, um einen MAC-Wert (214) zu erzeugen, und
- der Sendeempfänger (704) dazu konfiguriert ist, den MAC-Wert (214) als ein Informationselement der Signalisierungsnachricht (301) zu verwenden.

**4.** Vorrichtung (701) gemäß einem der vorhergehenden Ansprüche, **wobei:**

- die kryptographische Engine (703) dazu konfiguriert ist, vor dem Erzeugen des geteilten Geheimnisses (205) und des gekapselten Elements (206) zu prüfen, ob es über eine gültige Form des öffentlichen Schlüssels (202) der vorgesehenen Empfängervorrichtung verfügt,
- die kryptographische Engine (703) dazu konfiguriert ist, als eine Reaktion auf die Feststellung, dass sie über keine gültige Form des öffentlichen Schlüssels (202) der vorgesehenen Empfängervorrichtung verfügt, den Sendeempfänger (704) zu verwenden, um die gültige Form des öffentlichen Schlüssels (202) der vorgesehenen Empfängervorrichtung von einer der entfernten Parteien anzufordern (505).

**5.** Vorrichtung (701) gemäß einem der vorhergehenden Ansprüche, wobei:

- der Sendeempfänger (704) dazu konfiguriert ist, in Antwort darauf, dass ein Bedarf zum Einleiten der Signalisierung detektiert wurde, zu prüfen, ob er eine aktive Verbindung zu einem dedizierten Knoten unter den entfernten Parteien hat, und
- der Sendeempfänger (704) dazu konfiguriert ist, als eine Reaktion auf die Feststellung, dass er keine aktive Verbindung zu einem dedizierten Knoten unter den entfernten Parteien hat, eine Anforderung (501) an eine der entfernten Parteien zu übertragen, um einen dedizierten Knoten einzurichten.

**6.** Vorrichtung (701) zum Reagieren auf eine durch eine Initiatorvorrichtung eingeleitete Signalisierung, wobei die Vorrichtung Folgendes umfasst:

- eine kryptographische Engine (703), die dazu konfiguriert ist, Kryptoprodukte aus gegebenen Eingangsdaten zu erzeugen, und
- einen Sendeempfänger (704), der dazu konfiguriert ist, Kommunikationen mit entfernten Parteien aufzubauen und aufrechtzuerhalten;
**wobei** der Sendeempfänger (704) dazu konfiguriert ist, Informationselemente aus einer empfangenen Signalisierungsnachricht (301) an die kryptographische Engine (703) weiterzuleiten,
**und wobei** die kryptographische Engine (703) dazu konfiguriert ist,

- einen lokal gespeicherten privaten Schlüssel (401) und ein gekapseltes Element (206), wobei das gekapselte Element (206) als eines der Informationselemente durch den Sendeempfänger (704) weitergeleitet wird, als Eingaben für eine erste Entschlüsselungsoperation (402) zu verwenden, um das gekapselte Element (206) in ein geteiltes Geheimnis (205) zu entschlüsseln, und
- mindestens das geteilte Geheimnis (205) und eine verschlüsselte Nachricht (213), die als eines der Informationselemente durch den Sendeempfänger (704) weitergeleitet wird, als Eingaben für eine oder mehrere weitere kryptographische Operationen (209, 403) zu verwenden, um die verschlüsselte Nachricht (213) in eine Nachricht (211) zu entschlüsseln.

**7.** Vorrichtung gemäß Anspruch 6, wobei die kryptographische Engine (703) dazu konfiguriert ist, als Teil der einen oder mehreren weiteren kryptographischen Operationen,

- das geteilte Geheimnis (205), einen lokal gespeicherten Salt (208), und eine Nonce (207), die als eines der Informationselemente durch den Sendeempfänger (704) weitergeleitet wird, als Eingaben für eine zweite Entschlüsselungsoperation (209) zu verwenden, um einen geheimen Schlüssel (210) zu erzeugen, und
- den geheimen Schlüssel (210), die verschlüsselte Nachricht (213), und die Nonce (207) als Eingaben für eine dritte Entschlüsselungsoperation (403) zu verwenden, um die verschlüsselte Nachricht (213) in die Nachricht (211) zu entschlüsseln.

**8.** Vorrichtung gemäß Anspruch 7, **wobei:**

- die kryptographische Engine (703) dazu konfiguriert ist, als Teil der einen oder mehreren weiteren kryptographischen Operationen einen MAC-Wert (214), der als eines der Informationselemente durch den Sendeempfänger (704) weitergeleitet wird, als eine Eingabe für die dritte Entschlüsselungsoperation (403) zu verwenden, um die verschlüsselte Nachricht (213) in die Nachricht (211) zu entschlüsseln.

9. Verfahren zum Einleiten einer Signalisierung an eine vorgesehene Empfängervorrichtung, wobei das Verfahren Folgendes umfasst:

- Verwenden eines öffentlichen Schlüssels (202) der vorgesehenen Empfängervorrichtung und eines Seeds (201) als Eingaben für eine erste Verschlüsselungsoperation (203, 204), um ein geteiltes Geheimnis (205) zu erzeugen,
- Verwenden des öffentlichen Schlüssels (202) der vorgesehenen Empfängervorrichtung und des Seeds (201) als Eingaben für die erste Verschlüsselungsoperation (203, 204), um auch ein gekapseltes Element (206) zu erzeugen, das eine gekapselte Form des geteilten Geheimnisses (205) ist,
- Verwenden mindestens des geteilten Geheimnisses (205) und einer Nachricht (211) als Eingaben für eine oder mehrere weitere kryptographische Operationen (209, 212), um eine verschlüsselte Nachricht (213) zu erzeugen,
- Verwenden zumindest des gekapselten Elements (206) und der verschlüsselten Nachricht (213) als Informationselemente einer Signalisierungsnachricht (301), und
- Übertragen der Signalisierungsnachricht (301) an eine entfernte Partei zur weiteren Weiterleitung in Richtung der vorgesehenen Empfängervorrichtung.

10. Verfahren gemäß Anspruch 9, umfassend:

- als Teil der einen oder mehreren weiteren kryptographischen Operationen:

-- Verwenden einer Nonce (207), des geteilten Geheimnisses (205) und eines Salts (208) als Eingaben für eine zweite Verschlüsselungsoperation (209), um einen geheimen Schlüssel (210) zu erzeugen, und
-- Verwenden der Nachricht (211), des geheimen Schlüssels (210) und der Nonce (207) als Eingaben für eine dritte Verschlüsselungsoperation (212), um die verschlüsselte Nachricht (213) zu erzeugen; und
-- Verwenden auch der Nonce (207) als ein Informationselement der Signalisierungsnachricht (301).

11. Verfahren gemäß einem der Ansprüche 9 oder 10, umfassend:

- als Teil der einen oder mehreren weiteren kryptographischen Operationen, Verwenden der Nachricht (211) als eine Eingabe für eine MAC-Berechnung (212), um einen MAC-Wert (214) zu erzeugen, und
- Verwenden des MAC-Werts (214) als ein Informationselement der Signalisierungsnachricht (301).

12. Verfahren gemäß einem der Ansprüche 9 bis 11, umfassend:

- Prüfen, vor dem Erzeugen des geteilten Geheimnisses (205) und des gekapselten Elements (206), ob eine gültige Form des öffentlichen Schlüssels (202) der vorgesehenen Empfängervorrichtung verfügbar ist,
- als eine Reaktion auf die Feststellung, dass keine gültige Form des öffentlichen Schlüssels (202) der vorgesehenen Empfängervorrichtung verfügbar ist, Anfordern (505) der gültigen Form des öffentlichen Schlüssels (202) der vorgesehenen Empfängervorrichtung von einer entfernten Partei.

13. Verfahren gemäß einem der Ansprüche 9 bis 12, umfassend:

- Prüfen, in Antwort darauf, dass ein Bedarf zum Einleiten der Signalisierung detektiert wurde, ob eine aktive Verbindung zu einem dedizierten Knoten bei einer entfernten Partei verfügbar ist, und
- als eine Reaktion auf die Feststellung, dass keine aktive Verbindung zu einem dedizierten Knoten bei einer entfernten Partei verfügbar ist, Übertragen einer Anforderung (501) an eine entfernte Partei, einen dedizierten Knoten einzurichten.

14. Verfahren zum Reagieren auf eine durch eine Initiatorvorrichtung eingeleitete Signalisierung, wobei das Verfahren Folgendes umfasst:

- Weiterleiten von Informationselementen aus einer empfangenen Signalisierungsnachricht (301) an eine kryptographische Engine (703),

# EP 4 611 306 B1

- Verwenden eines lokal gespeicherten privaten Schlüssels (401) und eines gekapselten Elements (206), wobei das gekapselte Element (206) als eines der Informationselemente weitergeleitet wird, als Eingaben für eine erste Entschlüsselungsoperation (402), um das gekapselte Element (206) in ein geteiltes Geheimnis (205) zu entschlüsseln, und
- Verwenden zumindest des geteilten Geheimnisses (205) und einer verschlüsselten Nachricht (213), die als eines der Informationselemente weitergeleitet wird, als Eingaben für eine oder mehrere weitere kryptographische Operationen (209, 403), um die verschlüsselte Nachricht (213) in eine Nachricht (211) zu entschlüsseln.

**15.** Computerprogrammprodukt, das einen oder mehrere Sätze von einer oder mehreren maschinenausführbaren Anweisungen umfasst, die dazu konfiguriert sind, wenn sie durch einen oder mehrere Prozessoren ausgeführt werden, den einen oder die mehreren Prozessoren zu veranlassen, ein Verfahren gemäß einem der Ansprüche 9 bis 13 oder gemäß Anspruch 14 auszuführen.

## Revendications

**1.** Dispositif (701) pour l'initiation d'une signalisation vers un dispositif destinataire prévu, le dispositif comprenant :

- un moteur cryptographique (703) configuré pour produire des produits cryptographiques à partir de données d'entrée données, et
- un émetteur-récepteur (704) configuré pour établir et maintenir des communications avec des parties distantes ; **dans lequel** ledit moteur cryptographique (703) est configuré pour

- utiliser une clé publique (202) dudit dispositif destinataire prévu et une valeur de départ (201) comme entrées d'une première opération de chiffrement (203, 204) pour produire un secret partagé (205),
- en utilisant ladite clé publique (202) dudit dispositif destinataire prévu et ladite valeur de départ (201) comme entrées de ladite première opération de chiffrement (203, 204) pour produire également un élément encapsulé (206) qui est une forme encapsulée dudit secret partagé (205), et
- utiliser au moins ledit secret partagé (205) et un message (211) comme entrées d'une ou plusieurs autres opérations cryptographiques (209, 212) pour produire un message chiffré (213) ;

**et dans lequel** ledit émetteur-récepteur (704) est configuré pour

- utiliser au moins ledit élément encapsulé (206) et ledit message chiffré (213) comme éléments d'information d'un message de signalisation (301), et
- transmettre ledit message de signalisation (301) à l'une desdites parties distantes pour un transfert ultérieur vers ledit dispositif destinataire prévu.

**2.** Dispositif (701) selon la revendication 1, **dans lequel** :

- ledit moteur cryptographique (703) est configuré pour, dans le cadre desdites une ou plusieurs autres opérations cryptographiques :

-- utiliser un nonce (207), ledit secret partagé (205), et un sel (208) comme entrées d'une deuxième opération de chiffrement (209) pour produire une clé secrète (210), et
-- utiliser ledit message (211), ladite clé secrète (210), et ledit nonce (207) comme entrées d'une troisième opération de chiffrement (212) pour produire ledit message chiffré (213) ; et

- ledit émetteur-récepteur (704) est configuré pour utiliser également ledit nonce (207) comme un élément d'information dudit message de signalisation (301).

**3.** Dispositif (701) selon l'une quelconque des revendications 1 ou 2, **dans** lequel :

- ledit moteur cryptographique (703) est configuré pour, dans le cadre desdites une ou plusieurs autres opérations cryptographiques, utiliser au moins ledit message (211) comme une entrée d'un calcul de MAC (212) pour produire une valeur de MAC (214), et
- ledit émetteur-récepteur (704) est configuré pour utiliser ladite valeur de MAC (214) comme un élément d'information dudit message de signalisation (301).

**4.** Dispositif (701) selon l'une quelconque des revendications précédentes, **dans** lequel :

- ledit moteur cryptographique (703) est configuré pour vérifier, avant de produire ledit secret partagé (205) et ledit élément encapsulé (206), s'il dispose d'une forme valide de ladite clé publique (202) dudit dispositif destinataire prévu,
- ledit moteur cryptographique (703) est configuré pour, en réponse à la constatation qu'il ne dispose d'aucune forme valide de ladite clé publique (202) dudit dispositif destinataire prévu, utiliser ledit émetteur-récepteur (704) pour demander (505) ladite forme valide de ladite clé publique (202) dudit dispositif destinataire prévu à l'une desdites parties distantes.

**5.** Dispositif (701) selon l'une quelconque des revendications précédentes, dans lequel :

- ledit émetteur-récepteur (704) est configuré pour vérifier, en réponse à un besoin détecté d'initier ladite signalisation, s'il dispose d'une liaison active vers un nœud dédié parmi lesdites parties distantes, et
- ledit émetteur-récepteur (704) est configuré pour, en réponse à la constatation qu'il ne dispose d'aucune liaison active vers un nœud dédié parmi lesdites parties distantes, transmettre une demande (501) à l'une desdites parties distantes pour mettre en place un nœud dédié.

**6.** Dispositif (701) pour la réponse à une signalisation initiée par un dispositif initiateur, le dispositif comprenant :

- un moteur cryptographique (703) configuré pour produire des produits cryptographiques à partir de données d'entrée données, et
- un émetteur-récepteur (704) configuré pour établir et maintenir des communications avec des parties distantes ;

**dans lequel** ledit émetteur-récepteur (704) est configuré pour transférer des éléments d'information provenant d'un message de signalisation (301) reçu vers ledit moteur cryptographique (703, **et dans lequel** ledit moteur cryptographique (703) est configuré pour

- utiliser une clé privée (401) stockée localement et un élément encapsulé (206), ledit élément encapsulé (206) étant transféré comme l'un desdits éléments d'information par ledit émetteur-récepteur (704), comme entrées d'une première opération de déchiffrement (402) pour déchiffrer ledit élément encapsulé (206) en un secret partagé (205), et
- utiliser au moins ledit secret partagé (205) et un message chiffré (213) transféré comme l'un desdits éléments d'information par ledit émetteur-récepteur (704) comme entrées d'une ou plusieurs autres opérations cryptographiques (209, 403) pour déchiffrer ledit message chiffré (213) en un message (211).

**7.** Dispositif selon la revendication 6, dans lequel ledit moteur cryptographique (703) est configuré pour, dans le cadre desdites une ou plusieurs autres opérations cryptographiques,

- utiliser ledit secret partagé (205), un sel (208) stocké localement, et un nonce (207) transféré comme l'un desdits éléments d'information par ledit émetteur-récepteur (704) comme entrées d'une deuxième opération de déchiffrement (209) pour produire une clé secrète (210), et
- utiliser ladite clé secrète (210), ledit message chiffré (213), et ledit nonce (207) comme entrées d'une troisième opération de déchiffrement (403) pour déchiffrer ledit message chiffré (213) en ledit message (211).

**8.** Dispositif selon la revendication 7, **dans lequel** :

- ledit moteur cryptographique (703) est configuré pour, dans le cadre desdites une ou plusieurs autres opérations cryptographiques, utiliser une valeur de MAC (214) transférée comme l'un desdits éléments d'information par ledit émetteur-récepteur (704) comme une entrée de ladite troisième opération de déchiffrement (403) pour déchiffrer ledit message chiffré (213) en ledit message (211).

**9.** Procédé pour initier une signalisation vers un dispositif destinataire prévu, le procédé comprenant :

- l'utilisation d'une clé publique (202) dudit dispositif destinataire prévu et d'une valeur de départ (201) comme entrées d'une première opération de chiffrement (203, 204) pour produire un secret partagé (205),
- l'utilisation de ladite clé publique (202) dudit dispositif destinataire prévu et de ladite valeur de départ (201) comme entrées de ladite première opération de chiffrement (203, 204) pour produire également un élément encapsulé (206) qui est une forme encapsulée dudit secret partagé (205),
- l'utilisation au moins dudit secret partagé (205) et d'un message (211) comme entrées d'une ou plusieurs autres opérations cryptographiques (209, 212) pour produire un message chiffré (213) ;
- l'utilisation au moins dudit élément encapsulé (206) et dudit message chiffré (213) comme éléments d'information d'un message de signalisation (301), et
- la transmission dudit message de signalisation (301) à une partie distante pour un transfert ultérieur vers ledit dispositif destinataire prévu.

10. Procédé selon la revendication 9, comprenant :

- dans le cadre desdites une ou plusieurs autres opérations cryptographiques :

-- l'utilisation d'un nonce (207), dudit secret partagé (205), et d'un sel (208) comme entrées d'une deuxième opération de chiffrement (209) pour produire une clé secrète (210), et
-- l'utilisation dudit message (211), de ladite clé secrète (210), et dudit nonce (207) comme entrées d'une troisième opération de chiffrement (212) pour produire ledit message chiffré (213) ; et

- l'utilisation également dudit nonce (207) comme un élément d'information dudit message de signalisation (301).

11. Procédé selon l'une quelconque des revendications 9 ou 10, comprenant :

- dans le cadre desdites une ou plusieurs autres opérations cryptographiques, l'utilisation dudit message (211) comme une entrée d'un calcul de MAC (212) pour produire une valeur de MAC (214), et
- l'utilisation de ladite valeur de MAC (214) comme un élément d'information dudit message de signalisation (301).

12. Procédé selon l'une quelconque des revendications 9 à 11, comprenant :

- la vérification, avant de produire ledit secret partagé (205) et ledit élément encapsulé (206), si une forme valide de ladite clé publique (202) dudit dispositif destinataire prévu est disponible,
- en réponse à la constatation qu'aucune forme valide de ladite clé publique (202) dudit dispositif destinataire prévu n'est disponible, la demande (505) de ladite forme valide de ladite clé publique (202) dudit dispositif destinataire prévu à une partie distante.

13. Procédé selon l'une quelconque des revendications 9 à 12, comprenant :

- la vérification, en réponse à un besoin détecté d'initier ladite signalisation, si une liaison active avec un nœud dédié auprès d'une partie distante est disponible, et
- en réponse à la constatation qu'aucune liaison active avec un nœud dédié auprès d'une partie distante n'est disponible, la transmission d'une demande (501) à une partie distante pour mettre en place un nœud dédié.

14. Procédé pour répondre à une signalisation initiée par un dispositif initiateur, le procédé comprenant :

- le transfert d'éléments d'information provenant d'un message de signalisation (301) reçu vers un moteur cryptographique (703),
- l'utilisation d'une clé privée (401) stockée localement et d'un élément encapsulé (206), ledit élément encapsulé (206) étant transféré comme l'un desdits éléments d'information, comme entrées d'une première opération de déchiffrement (402) pour déchiffrer ledit élément encapsulé (206) en un secret partagé (205), et
- l'utilisation au moins dudit secret partagé (205) et d'un message chiffré (213) transféré comme l'un desdits éléments d'information comme entrées d'une ou plusieurs autres opérations cryptographiques (209, 403) pour déchiffrer ledit message chiffré (213) en un message (211).

15. Produit de programme informatique comprenant un ou plusieurs ensembles d'une ou plusieurs instructions exécutables par machine qui sont configurées pour, lorsqu'elles sont exécutées par un ou plusieurs processeurs, amener lesdits un ou plusieurs processeurs à exécuter un procédé selon l'une quelconque des revendications 9 à 13 ou selon la revendication 14.

USER A  MEDIATOR(S)  USER B

Fig. 1

**Fig. 2**

| ENCAPSULATED SHARED SECRET | MAC VALUE | NONCE | ENCRYPTED MESSAGE |
|---|---|---|---|

301    206    214    207    213

**Fig. 3**

PRIVATE KEY OF USER B  401

ENCAPSULATED SHARED SECRET  206

402

FOURTH CRYPTO-OPERATION

SHARED SECRET  205

208

SALT

209

SECOND CRYPTO-OPERATION

NONCE

207

210

SECRET KEY

213

ENCRYPTED MESSAGE

214

(MAC VALUE)

403

FIFTH CRYPTO-OPERATION

211

MESSAGE

**Fig. 4**

**Fig. 5**

INITIATE — 601

GROUP NODE KNOWN? — 602

REQUEST GROUP NODE — 603

CONNECT TO GROUP NODE — 604

USER B FOUND IN GROUP NODE? — 605

INITIATE WAKE-UP OF USER B — 606

VALID CERTIFICATE FOR USER B? — 607

REQUEST CERTIFICATE — 608

CREATE AND ENCRYPT SIGNAL — 609

TRANSMIT SIGNAL — 610

SEND RING TO USER B — 612

WAIT FOR B IN GROUP NODE — 611

RECEIVE RANG FROM USER B — 613

**Fig. 6**

USER INTERFACE — 702

CRYPTOGRAPHIC ENGINE — 703

TRANSCEIVER — 704

701

**Fig. 7**

**EP 4 611 306 B1**

**Patent documents cited in the description**

- US 2008162935 A
- EP 22157019